(19) Europäisches Patentamt
European Patent Office
Office européen des brevets

(11) **EP 1 852 255 B1**

(12) **EUROPÄISCHE PATENTSCHRIFT**

(45) Veröffentlichungstag und Bekanntmachung des Hinweises auf die Patenterteilung:
**09.12.2009 Patentblatt 2009/50**

(51) Int Cl.:
***B32B 27/36*** (2006.01)   ***C08J 5/18*** (2006.01)

(21) Anmeldenummer: **07006656.8**

(22) Anmeldetag: **30.03.2007**

(54) **Polyesterfolie mit geringer mechanischer Festigkeit**

Polyester film having low mechanical strength

Feuille de polyester à faible résistance mécanique

(84) Benannte Vertragsstaaten:
**DE FR GB IT LU**

(30) Priorität: **08.04.2006 DE 102006016635**
**08.04.2006 DE 102006016634**

(43) Veröffentlichungstag der Anmeldung:
**07.11.2007 Patentblatt 2007/45**

(73) Patentinhaber: **Mitsubishi Polyester Film GmbH**
**65203 Wiesbaden (DE)**

(72) Erfinder:
• **Klein, Oliver, Dr.**
**55437 Ockenheim (DE)**

• **Pfeiffer, Herbert, Dr., Professor**
**55126 Mainz (DE)**
• **Hilkert, Gottfried, Dr.**
**55291 Saulheim (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A- 1 529 797    EP-A2- 0 415 383**
**US-B1- 6 787 245**

**Beschreibung**

Die Erfindung betrifft eine transparente, biaxial orientierte Polyesterfolie mit einer Basisschicht (B), die zumindest einen aliphatischen Polyester enthält. Hierdurch erhält die biaxial orientierte Polyesterfolie eine geringe mechanische Festigkeit mit einer gewünschten Haptik. In einer besonderen Ausgestaltung enthält die Folie eine auf der Basisschicht (B) angeordnete heißsiegelfähige Deckschicht (A). Die Erfindung betrifft weiterhin ein Verfahren zur Herstellung solcher Folien und ihre Verwendung.

Stand der Technik

Transparente, biaxial orientierte Polyesterfolien, die sich durch verringerte mechanische Eigenschaften (geringere Festigkeiten, geringere Moduln) auszeichnen, sind nach dem Stand der Technik bekannt. In den meisten Fällen erhalten die Folien ihre veränderten Eigenschaften durch die Verwendung anderer aromatischer Polyester neben dem Standard Polyethylenterephthalat. Beispiele hierfür sind die weithin verwendeten glykolmodifizierten aromatischen Polyester wie beispielsweise Polybutylenterephthalat (PBT) oder Polytrimethylenterephthalat (PTT). Alternativ dazu sind die in Bezug auf die Säurekomponente modifizierten aromatischen Polyester Polyethylenisophthalat (IPA) bekannt.

Ein Beispiel dafür bildet die JP 2000094473, die die Nutzung einer Polyesterfolie mit größer/gleich 80 Gew.-% PTT beschreibt und die einen Elastizitätsmodul von kleiner/gleich 5884 N/mm$^2$ erreicht. Die Folie zeichnet sich durch eine gute Verformbarkeit aus und kann beispielsweise als Transferfolie verwendet werden. Der Nachteil dieser Folie ist, dass man mit den verwendeten Rohstoffen die gewünschten niedrigen mechanischen Festigkeiten nicht erreichen kann.

Ein weiteres Beispiel wird in der JP 2004202702 beschrieben. Ziel der Erfindung ist es, eine leicht einreißbare Folie herzustellen. Dies wird einerseits durch die Verwendung von Polyester-Rohstoffen (Blends und Copolymere) in der Basisschicht der Folie erreicht, die Schmelzpunkte haben, die mindestens 10 °C niedriger sind als die Schmelzpunkte der Polyester in den Außenschichten, und andererseits durch die Wahl von bestimmten Parametern in der Thermofixierung. Mit diesen Folien, deren Basisschicht in den Beispielen aus Blends bzw. Copolymeren von PET mit IPA oder PBT hergestellt wird, können ebenfalls die gewünschten niedrigen mechanischen Festigkeiten nicht erreicht werden.

Ein weiteres Beispiel dafür bildet die EP-A-0 415 383, die die Nutzung einer Polyesterfolie mit einem Schmelzpunkt von 210 bis 245 °C, einer planaren Orientierung von 0,10 bis 0,16, einem Schrumpf von kleiner/gleich 10 % und einer Dichte von weniger als 1,385 g/cm$^3$ beschreibt. Die Folie zeichnet sich durch eine gute Verformbarkeit und eine gute Haftung auf Metall aus und soll z. B. in der Dosenlaminierung eingesetzt werden. Nachteilig ist, dass die verwendeten Polyester, die Festigkeit und Kristallinität der Folie nicht ausreichend herabsetzen, so dass die Steifheit der Folie nicht ausreichend erniedrigt wird.

Ein weiteres Beispiel ist die EP-A-1 453 895, die eine biaxial orientierte Polyesterfolie mit einer Glastemperatur von größer/gleich 60 °C beansprucht, die eine Dichte von kleiner/gleich 1,38 g/cm$^3$ und eine Rückfaltung von mindestens 60 % aufweist. Nachteilig ist, dass die verwendeten Polyester die Festigkeit der Folie nicht ausreichend herabsetzen, so dass die mechanischen Eigenschaften der Folie nicht ausreichend erniedrigt werden.

In der EP-A-0 612 790 wird eine transparente, biaxial orientierte Polyesterfolie beschrieben, die ein Partikelsystem aus vernetzten Polymeren enthält. Die Folie ist durch eine planare Orientierung Δp gekennzeichnet, die größer ist als 0,14. Alle in den Beispielen aufgeführten Folien haben eine planare Orientierung Δp von 0,17. Aufgrund der in den Beispielen angegeben planaren Orientierung Δp von 0,17 können mit diesen Folien ebenfalls die gewünschten niedrigen mechanischen Festigkeiten nicht erreicht werden.

Ebenfalls bekannt nach dem Stand der Technik sind heißsiegelfähige, biaxial orientierte Polyesterfolien.

In der EP-A-0 035 835 wird eine heißsiegelfähige Polyesterfolie beschrieben, der zur Verbesserung des Wickelverhaltens in der Siegelschicht Partikel zugesetzt werden, deren mittlere Teilchengröße die Schichtdicke der Siegelschicht übersteigt. Durch die teilchenförmigen Zusatzstoffe werden Oberflächenvorsprünge gebildet, die das unerwünschte Blocken und Kleben der Folie an Walzen oder Führungen verhindern. Durch die Wahl von Partikeln mit größerem Durchmesser als die Dicke der Siegelschicht und den in den Beispielen angegebenen Konzentrationen wird das Siegelverhalten der Folie verschlechtert. Die Siegelnaht wird bei 140 °C hergestellt und die Siegelnahtfestigkeit bei 23 °C bestimmt, und sie liegt in einem Bereich von 63 bis 120 N/m (entsprechend 0,97 bis 1,8 N/15 mm Folienbreite). Die biaxial orientierte Polyesterfolie besitzt nicht die geforderte geringe mechanische Festigkeit mit der gewünschten Haptik und guten Verformbarkeit.

In der EP-A-0 515 096 wird eine heißsiegelfähige Polyesterfolie beschrieben, die auf der siegelfähigen Schicht ein zusätzliches Additiv aufweist. Das Additiv kann z. B. anorganische Partikel enthalten und wird vorzugsweise als wässrige Schicht auf die Folie bei deren Herstellung aufgetragen. Hierdurch sollen die guten Siegeleigenschaften beibehalten werden und die Folie gut zu verarbeiten sein. Angaben zum Siegeltemperaturbereich der Folie werden in dieser Schrift nicht gemacht. Die Siegelnaht wird bei 140 °C hergestellt und die Siegelnahtfestigkeit bei 23 °C bestimmt, und sie beträgt mehr als 200 N/m (entsprechend 3 N/15 mm Folienbreite). Für eine 3 μm dicke Siegelschicht wird eine Siegelnahtfestigkeit von 275 N/m (entsprechend 4,125 N/15 mm Folienbreite) angegeben. Die biaxial orientierte Polyesterfolie besitzt nicht die geforderte geringe mechanische Festigkeit mit der gewünschten Haptik und guten Verformbarkeit.

In der EP-A-1 138 480 wird eine heißsiegelfähige Polyesterfolie mit einer Basisschicht B, einer heißsiegelfähigen Deckschicht A und einer weiteren, nicht siegelfähigen Deckschicht C beschrieben. Die siegelfähige Deckschicht A hat eine Siegelanspringtemperatur (auch Mindestsiegeltemperatur genannt) von maximal 110 °C und eine Siegelnahtfestigkeit von mindestens 1,3 N/15 mm Folienbreite. Die Topographien der beiden Deckschichten A und C sind durch bestimmte Merkmale gekennzeichnet. Die erfindungsgemäße Folie eignet sich besonders für den Einsatz in der flexiblen Verpackung, und zwar insbesondere für den Einsatz auf schnelllaufenden Verpackungsmaschinen. Die biaxial orientierte Polyesterfolie besitzt nicht die geforderte geringe mechanische Festigkeit mit der gewünschten Haptik und guten Verformbarkeit.

Aufgabe der vorliegenden Erfindung war es, eine biaxial orientierte Polyesterfolie zur Verfügung zu stellen, die sich durch verringerte mechanische Eigenschaften, insbesondere durch eine geringere Reißfestigkeit und einen geringeren Elastizitätsmodul, auszeichnet. Sie sollte die Nachteile der Folien nach dem Stand der Technik nicht mehr aufweisen und sich insbesondere durch folgende bevorzugte Eigenschaftskombinationen auszeichnen:

- Sie weist einen Elastizitätsmodul (E-Modul) von kleiner/gleich 3000 N/mm$^2$ in beiden Orientierungsrichtungen (MD und TD) auf.
- Sie weist eine Reißfestigkeit von kleiner/gleich 100 N/mm$^2$ in beiden Orientierungsrichtungen (MD und TD) auf.
- Sie hat eine deutlich reduzierte Kristallinität im Vergleich zu PET, wodurch ihre planare Orientierung zwischen 0,03 und 0,12 liegt und ihre Dichte kleiner/gleich 1,38 g/cm$^3$ ist.
- Sie lässt sich wirtschaftlich herstellen. Dies bedeutet beispielsweise, dass zu ihrer Herstellung in der Industrie übliche Streckverfahren eingesetzt und Maschinengeschwindigkeiten bis zu 500 m/min angewendet werden können.
- Bei der Herstellung der Folie ist gewährleistet, dass das anfallende Regenerat in einer Menge von ca. 5 bis zu 60 Gew.-% wieder dem Herstellprozess zugeführt werden kann, ohne dass dabei die physikalischen und optischen Eigenschaften der Folie, insbesondere aber der Elastizitätsmodul und die Reißfestigkeit, nennenswert negativ beeinflusst werden.

(MD = Längs- oder Maschinenrichtung; TD = Querrichtung)

In einer bevorzugten Ausgestaltung zeichnet sich die erfindungsgemäße Folie weiterhin durch folgendes Merkmal aus:

- Sie ist zumindest auf einer Seite heißsiegelfähig gegenüber sich selbst und gegenüber Substraten aus z. B. APET, A/CPET, CPET oder Metallen.

(APET = amorphes Polyethylenterephthalat (PET); CPET = kristallines PET)

Weiterhin zeigt die Folie das gewünschte gute Verarbeitungsverhalten. Sie zeigt insbesondere keine Klebeneigung an Walzen oder anderen mechanischen Teilen, keine Blockprobleme und keine Längsrillen beim Wickeln. Mit der Folie kann damit eine Kundenrolle in sehr guter Wickelqualität ohne weiteres hergestellt werden.

Gelöst wird die Aufgabe durch die Bereitstellung einer biaxial orientierten Polyesterfolie, welche eine Basisschicht (B) aufweist, die zu mindestens 80 Gew.-% einen Polyester enthält, der zu 55 - 90 Mol-% aus Einheiten aufgebaut ist, die auf mindestens zwei aromatische Dicarbonsäure zurückgehen, und der zu 5 - 45 Mol-% aus Einheiten aufgebaut ist, die auf mindestens eine aliphatische Dicarbonsäure zurückgehen, wobei die Summe der dicarbonsäureabgeleiteten Molprozente 100 ergibt.

In der bevorzugten Ausführungsform weist die Folie darüber hinaus noch eine heißsiegelfähige Deckschicht (A) auf, wobei diese heißsiegelfähige Deckschicht (A) einen Copolyester in einem Gewichtsanteil von größer/gleich 70 % enthält, der aus 60 bis 95 Mol-% Ethylenterephthalat und aus 40 bis 5 Mol-% Ethylenisophthalat aufgebaut ist.

Gewichtsanteil (Gew.-%) bezieht sich auf das Gesamtgewicht der entsprechenden Schicht.

Polyester bedeutet dabei auch Polyestermischungen und/oder Copolyester Copolyester steht auch für Copolyestermischungen.

Die Folie nach der vorliegenden Erfindung kann demzufolge nur aus der Basisschicht (B) bestehen, die die erfindungsgemäße Polymermischung enthält. In diesem Fall ist die Folie einschichtig aufgebaut. In einer bevorzugten Ausführungsform ist die Folie zumindest zweischichtig aufgebaut und umfasst mindestens die Basisschicht (B) und eine heißsiegelfähige Deckschicht (A). In einer anderen erfindungsgemäßen Ausführungsform ist die Folie mehrschichtig, beispielsweise dreischichtig, aufgebaut. Sie besteht dann z.B. aus der erfindungsgemäßen Basisschicht (B), der auf der einen Seite der Basisschicht (B) aufgebrachten Deckschicht (A) sowie der auf der anderen Seite der Basisschicht (B) aufgebrachten Deckschicht (C). Die Schichten (A) und (C) können gleich oder verschieden sein.

Im Falle der bevorzugten dreischichtigen Ausführungsform besteht die Folie aus der Basisschicht (B), der heißsiegelfähigen Deckschicht (A) und einer der heißsiegelfähigen Deckschicht (A) gegenüberliegenden Deckschicht (C) - Schichtaufbau ABC. In der bevorzugten Ausführungsform ist die Deckschicht (C) nicht heißsiegelfähig. Nicht heißsiegelfähig heißt hier, dass ihre Siegelanspringtemperatur, auch Mindestsiegeltemperatur genannt, größer als 125 °C (gegen sich selbst) ist. In einer anderen Ausführungsform ist auch die Deckschicht (C) heißsiegelfähig. Sie enthält dann bevorzugt die gleichen oder vergleichbare Copolyester wie die Deckschicht (A).

Basisschicht (B)

Die Basisschicht (B) enthält einen Polyester in einem Gewichtsanteil von größer/gleich 80 %, wobei der erfindungsgemäße Polyester aufgebaut ist aus Einheiten, die von aliphatischen und aromatischen Dicarbonsäuren abgeleitet sind. Die auf die aromatischen Dicarbonsäuren zurückgehenden Einheiten sind in dem Polyester in einer Menge von 55-95 Mol-%, bevorzugt 60-90 Mol-%, besonders bevorzugt 65-85 Mol-%, enthalten. Die auf die aliphatischen Dicarbonsäuren zurückgehenden Einheiten sind in dem Polyester in einer Menge von 5-45 Mol-%, bevorzugt 10-40 Mol-%, besonders bevorzugt 15-35 Mol-%, enthalten, wobei die Mol-%-Angaben sich immer zu 100 % ergänzen. Die hierzu korrespondierenden Dioleinheiten ergeben ebenfalls immer 100 Mol-%.

Bevorzugte aliphatische Dicarbonsäuren sind Pimelinsäure, Korksäure, Azelainsäure, Sebazinsäure, Glutarsäure und Adipinsäure. Insbesondere bevorzugt sind die Azelainsäure, die Sebazinsäure und die Adipinsäure.

Bevorzugte aromatische Dicarbonsäuren sind Terephthalsäure, Isophthalsäure, 5-Sulfoisophthalsäure und 2,6-Naphthalindicarbonsäure. Insbesondere bevorzugt sind die Terephthalsäure und die Isophthalsäure.

Bevorzugte Diole sind Ethylenglykol, Trimethylenglykol, Butylenglykol und Neopentylglykol.

Im Allgemeinen beinhaltet der erfindungsgemäße Polyester die folgenden Dicarboxylate und Alkylene, jeweils bezogen auf die Gesamtdicarboxylat- bzw. Gesamtalkylenmenge:

- 55 bis 90 Mol-%, bevorzugt 60 bis 90 Mol-% und besonders bevorzugt 65 bis 70 Mol-% Dicarboxylat, ausgewählt aus einem oder mehreren Dicarboxylaten aus der Gruppe Terephthalat, Isophthalat und 5-Sulfoisophthalat
- 5 bis 45 Mol -%, bevorzugt 8 bis 40 Mol-% und besonders bevorzugt 11 bis 35 Mol-% Azelat,
- 0 bis 50 Mol-%, bevorzugt 0 bis 40 Mol-% und besonders bevorzugt 0,2 bis 30 Mol-% Sebazat,
- 0 bis 50 Mol-%, bevorzugt 0 bis 40 Mol-% und besonders bevorzugt 0 bis 30 Mol-% Adipat,
- mehr als 30 Mol -%, bevorzugt mehr als 40 Mol-% und besonders bevorzugt mehr als 50 Mol-% Ethylen-, Propylen- oder Butylengruppen.

Sofern die aromatischen Dicarboxylate Isophthalat und/oder 5-Sulfoisophthalat beinhalten sind diese in folgenden molaren Anteilen enthalten

- >0 bis 25 Mol-%, bevorzugt 5 bis 20 Mol-% und besonders bevorzugt 10 bis 20 Mol-% Isophthalat,
- >0 bis 5 Mol-%, bevorzugt 1 bis 4 Mol-% und besonders bevorzugt 2 bis 3 Mol-% 5-Sulfoisophthalat.

0 bis zu 10 Gew.-% der Basisschicht (B) können aus Partikeln, Additiven, Hilfsmitteln und/oder sonstigen in der Polyesterfolientechnologie üblicherweise verwendeten Zusatzstoffen bestehen.

Deckschichten (A) und (C), sowie Zwischenschichten

In einer weiteren erfindungsgemäßen Ausführungsform ist die Folie mehrschichtig, beispielsweise zwei- oder dreischichtig aufgebaut. Im Falle einer dreischichtigen Folie besteht sie dann z. B. aus der erfindungsgemäßen Basisschicht (B), der auf der einen Seite der Basisschicht (B) aufgebrachten Deckschicht (A) sowie der auf der anderen Seite der Basisschicht (B) aufgebrachten Deckschicht (C). Die Schichten (A) und (C) können gleich oder verschieden sein. Darüber hinaus kann die Folie einen anderen Schichtaufbau aufweisen, z. B. eine auf der Basisschicht (B) angeordnete Deckschicht (C) oder aber auch Zwischenschichten wie z. B. zwischen der Basisschicht (B) und der Deckschicht (C). Typische Folienaufbauten sind dann z. B. B (= Monofolie) oder BC oder BZC, wobei (Z) eine Zwischenschicht und (C) eine Deckschicht darstellt, oder auch ABC oder ABA.

Für die Deckschichten und für die Zwischenschichten können prinzipiell die gleichen Polymere verwendet werden wie für die Basisschicht (B). In diesen Schichten können aber auch andere Materialien enthalten sein, wobei dann diese Schichten bevorzugt aus einem Gemisch von Polymeren, Copolymeren oder Homopolymeren bestehen. Bevorzugt sind beispielsweise solche Gemische oder auch Copolymere, die Ethylenisophthalat-Einheiten und/oder Ethylen-2,6-naphthalat-Einheiten und/oder Ethylenterephthalat-Einheiten enthalten.

Bevorzugt bis zu 10 Mol-% der Polymere können aus weiteren Comonomeren bestehen.

Besonders zweckmäßig ist, wenn in der Deckschicht (C) und/oder (A) ein Polyester-Copolymer auf Basis von Isophthalsäure und Terephthalsäure verwendet wird. In diesem Fall sind die optischen Eigenschaften der Folie besonders gut.

In diesem Fall enthält die Deckschicht (C) und/oder (A) der Folie im Wesentlichen ein Polyestercopolymeres, das ganz oder überwiegend aus Isophthalsäure- und Terephthalsäure-Einheiten und aus Ethylenglykol-Einheiten zusammengesetzt ist. Die restlichen Monomereinheiten stammen aus anderen aliphatischen, cycloaliphatischen oder aromatischen Diolen bzw. anderen Dicarbonsäuren wie sie auch in der Basisschicht vorkommen können. Die bevorzugten Copolyester, die die gewünschten Eigenschaften der Folie bereitstellen (insbesondere die Optik), sind solche, die aus Terephthalat- und Isophthalat-Einheiten und aus Ethylenglykol-Einheiten aufgebaut sind. Der Anteil an Ethylenterephthalat beträgt bevorzugt 40 bis 97 Mol-% und der entsprechende Anteil an Ethylenisophthalat 60 bis 3 Mol-%.

In der bevorzugten heißsiegelfähigen Variante der erfindungsgemäßen Folie enthält die heißsiegelfähige Deckschicht (A), die bevorzugt durch Coextrusion auf die Basisschicht B aufgebracht wird, im Wesentlichen einen Copolyester in einem Gewichtsanteil von größer/gleich 70 %, der aus 60 bis 95 Mol-% Ethylenterephthalat und aus 40 bis 5 Mol-% Ethylenisophthalat aufgebaut ist. Bevorzugt sind Copolyester, bei denen der Anteil an Ethylenterephthalat 65 bis 90 Mol-% und der entsprechende Anteil an Ethylenisophthalat 35 bis 10 Mol-% beträgt, und ganz bevorzugt sind Copolyester, bei denen der Anteil an Ethylenterephthalat 70 bis 85 Mol-% und der entsprechende Anteil an Ethylenisophthalat 30 bis 15 Mol-% beträgt.

In einer anderen günstigen Ausführungsform der Erfindung bestehen die Deckschichten (A) und/oder (C) der Folie bevorzugt zu mindestens 55 Gew. % aus thermoplastischem Polyester. Dafür geeignet sind z. B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis- hydroxymethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Polyester, die zu mindestens 90 Mol-%, besonders bevorzugt mindestens 95 Mol-%, aus Ethylenglykol- und Terephthalsäure-Einheiten oder aus Ethylenglykol-und Naphthalin-2,6-dicarbonsäure-Einheiten bestehen. Die restlichen Monomereinheiten stammen aus anderen Diolen bzw. anderen Dicarbonsäuren. In vorteilhafter Weise können für die Deckschichten (A) und (C) auch Copolymere oder Mischungen oder Blends aus den genannten Homo und/oder Copolymeren verwendet werden.

Solche Polyester können auch in der Basisschicht (B) enthalten sein.

In einer weiteren bevorzugten, mehrschichtigen Ausführungsform ist die Folienzusammensetzung bzw. der Folienaufbau so gewählt, dass die Glasübergangstemperatur Tg der Polymere oder der polymeren Mischung zumindest einer der Deckschichten (A) und (C) höher liegt als die Glasübergangstemperatur der Polymere der Basisschicht (B). Die Glasübergangstemperatur der Polymere für die Dechschichten (A) und (C) liegt bevorzugt im Bereich von 50 bis 100 °C. Der Folienaufbau ist hier bevorzugt 3-schichtig, also ABC oder ABA, besonders bevorzugt ist ein ABA-Schichtaufbau. Die Deckschichten (A) sind hierbei im Rahmen produktionsbedingter Schwankungen als gleich anzusehen. Dieser symmetrische Folienaufbau bringt hinsichtlich einer einwandfreien Verarbeitung der Folie sehr gute Voraussetzungen mit sich. Solche Folien besitzen praktisch keine Rollneigung (curling) und zeigen bei der Herstellung auch kein Verkleben oder Verblocken an metallischen Walzen.

In der oben beschriebenen Ausgestaltung liegt somit der Tg2-Wert der Polyesterfolie über dem Tg2-Wert der Basisschicht, aber unterhalb dem Tg2-Wert der beiden Deckschichten (A) und (C).

Bei der Bestimmung der Glasübergangstemperaturen mittels Differential Scanning Calorimetry (DSC) können die Übergänge der Schichten nicht unterschieden werden.

Glasübergänge, die beim ersten Aufheizvorgang an biaxial orientierten, wärmefixierten Folien bestimmt werden (im folgenden $T_g1$ genannt), sind durch die Kristallinität sowie die molekularen Spannungen im amorphen Anteil der Probe in ihrem Ausmaß relativ gering, über einen breiten Temperaturbereich verteilt und zu höheren Temperaturen verschoben. Vor allem aufgrund von Orientierungseffekten eignen sie sich nicht zur Charakterisierung eines Polymers. Die Auflösung von DSC-Messgeräten reicht oft nicht aus, um die wegen der Orientierung und Kristallinität kleinen und "verschmierten" Glassstufen im ersten Aufheizvorgang ($T_g1$) der einzelnen Schichten der erfindungsgemäßen Folie zu erfassen. Wenn die Proben aufgeschmolzen und dann unter ihre Glasübergangstemperatur rasch wieder abgekühlt (abgeschreckt) werden, so werden die Orientierungseffekte eliminiert. Beim erneuten Aufheizen werden dann Glasübergänge (hier als $T_g2$ bezeichnet) gemessen, die eine höhere Intensität haben und charakteristisch sind für die jeweiligen Polymere. Die Glasübergänge der einzelnen Schichten lassen sich allerdings auch hier nicht unterscheiden, weil sich die Schichten beim Aufschmelzen vermischen und die darin enthaltenen Polyester untereinander Umesterungsreaktionen eingehen. Es ist jedoch völlig ausreichend, den Tg2-Wert der gesamten coextrudierten Folie mit dem $T_g2$-Wert des für die Basisschicht bzw. die Deckschichten verwendeten Polymers zu vergleichen. In der erfindungsgemäßen Folie liegt der Tg2-Wert der coextrudierten Folie höher als der der Basisschicht, aber unterhalb des Tg2-Werts der beiden Deckschichten (A) und (C).

Die Dicke der Deckschichten ist bevorzugt größer als 0,5 μm und liegt insbesondere im Bereich von 1 bis 20 μm und besonders bevorzugt im Bereich von 1,5 bis 10 μm.

Die Herstellung des erfindungsgemäßen Polyesters für die Basisschicht (B) und die Deckschichten (A) und (C) kann beispielsweise nach dem bekannten Umesterungsverfahren erfolgen. Dabei geht man von Dicarbonsäureestern und Diolen aus, die mit den üblichen Umesterungskatalysatoren wie Zink-, Calcium-, Lithium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus. In den beiden vorgenannten Fällen sind die einzelnen Komponenten in dem erfindungsgemäßen Polyester statistisch verteilt.

Daneben hat es sich als günstig erwiesen, den erfindungsgemäßen Polyester für die Basisschicht (B) nach einem der folgenden beiden Verfahren herzustellen:

a) Der aromatische Polyester und der aliphatische Polyester - beide hergestellt z. B. nach den oben beschriebenen Verfahren - werden im gewünschten Verhältnis gemeinsam aufgeschmolzen und gemischt. Dies kann entweder in einem Reaktionskessel, in einem Einschneckenextruder, vorzugsweise aber in einem Zweischneckenextruder erfolgen. Sofort nach dem Aufschmelzen beginnen Umesterungsreaktionen zwischen den beteiligten Polyestern. Zunächst erhält man Blockcopolymere, mit zunehmender Reaktionszeit - abhängig von der Temperatur und Mischwirkung des Rührelements - werden die Blöcke kleiner, und bei langer Reaktionszeit erhält man ein statistisches Copolymer. Allerdings ist es nicht nötig und auch nicht unbedingt vorteilhaft zu warten, bis eine statistische Verteilung erreicht ist, denn die gewünschten Eigenschaften werden auch mit einem Blockcopolymer erhalten. Anschließend wird das erhaltene Copolymer aus einer Düse herausgepresst und granuliert.

b) Der aromatische Polyester (Komponente I) und der aliphatische Polyester (Komponente II) - beide wiederum hergestellt z. B. nach den oben beschriebenen Verfahren - werden im gewünschten Verhältnis als Granulat gemischt und die Mischung dem Extruder für die Basisschicht (B) zugeführt. Hier findet die Umesterung zum Copolymer direkt während der Herstellung der Folie statt. Dieses Verfahren hat den Vorteil, dass es sehr wirtschaftlich ist. In der Regel werden mit diesem Verfahren Blockcopolymere erhalten, wobei die Blocklänge von der Extrusionstemperatur, der Mischwirkung des Extruders und der Verweilzeit in der Schmelze abhängt. Dabei ist es für das erfindungsgemäße Verfahren zweckmäßig, wenn die Extrusionstemperatur oberhalb der Schmelztemperatur $T_S$ des höher schmelzenden Polyesters liegt. Im Allgemeinen liegt die Extrusionstemperatur mindestens 5 °C, vorzugsweise 5 bis 50 °C, insbesondere aber 5 bis 40 °C, über der Schmelztemperatur des höher schmelzenden Polyesters. Als eine bevorzugte Extrusionseinheit für die Verarbeitung der Mischung aus den Komponenten I und II bietet sich der Zweischneckenextruder an. Zu erwähnen bleibt, dass auch mit dem Einschneckenextruder gute Ergebnisse erzielt werden können und damit dieses Prinzip prinzipiell angewendet werden kann.

Die Basisschicht (B) sowie vorhandene Deck- und Zwischenschichten können zusätzlich übliche Additive wie z. B. Stabilisatoren und Antiblockmittel enthalten. Sie werden zweckmäßig dem Polymer bzw. der Polymermischung bereits vor dem Aufschmelzen zugesetzt. Als Stabilisatoren werden beispielsweise Phosphorverbindungen wie Phosphorsäure oder Phosphorsäureester eingesetzt.

Typische Antiblockmittel (in diesem Zusammenhang auch als Pigmente oder Füllstoffe bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polystyrol- oder Acrylat-Partikel.

Als Additive können auch Mischungen von zwei oder mehreren verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen, z. B. als glykolische Dispersion während der Polykondensation oder über Masterbatche bei der Extrusion, zugegeben werden (oder auch als "Direct Additive Addition" [DAA] bei der Extrusion direkt in den Extruder).

Im Falle eines einschichtigen Aufbaus (die Folie besteht in diesem Fall nur aus der Basisschicht (B)) enthält die Folie bevorzugt Füllstoffe in einer Konzentration von 0,02 bis 1 Gew.-%, insbesondere Füllstoffe in einer Konzentration von 0,04 bis 0,8 Gew.-% und besonders bevorzugt Füllstoffe in einer Konzentration von 0,06 bis 0,6 Gew.-%, bezogen auf das Gewicht der Folie bzw. der Schicht (B) (eine detaillierte Beschreibung geeigneter Füllstoffe bzw. Antiblockmittel findet sich beispielsweise in der EP-A-0 602 964).

Beträgt die Konzentration weniger als 0,02 Gew.-%, so kann die Folie blocken und lässt sich dann z. B. nicht mehr wickeln. Beträgt die Konzentration dagegen mehr als 1 Gew.-%, so verliert die Folie ihre hohe Transparenz und wird trüb. Sie kann dann z. B. als Verpackungsfolie nicht mehr verwendet werden.

Auch die Deckschichten enthalten bevorzugt die für die Basisschicht (B) angegebenen Füllstoffkonzentrationen.

In einer weiteren bevorzugten Ausführungsform der Erfindung beträgt der Füllstoffanteil in den Deckschichten (A oder/und C) bevorzugt weniger als 0,6 Gew.-%, bevorzugt weniger als 0,5 Gew.-% und besonders bevorzugt weniger als 0,4 Gew.-%, bezogen auf das Gewicht der jeweiligen Deckschicht.

In einer bevorzugten Ausführungsform der Erfindung beträgt der Füllstoffanteil in der heißsiegelfähigen Deckschicht (A) 0 bis 0,4 Gew.-%, bevorzugt 0 bis 0,2 Gew.-% und besonders bevorzugt 0 bis 0,1 Gew.-%, bezogen auf das Gewicht der Deckschicht (A).

In einer weiteren günstigen Ausführungsform der Erfindung enthält die Deckschicht (C) zur Erzielung einer guten Wickelung und einer guten Verarbeitbarkeit ein Pigment, bei dem der mittlere Durchmesser ($d_{50}$-Wert) im Bereich von 2 bis 5 $\mu$m, bevorzugt von 2 bis 4 $\mu$m, liegt. Die Deckschicht (C) ist zur Verbesserung des Wickelverhaltens und der Verarbeitbarkeit bevorzugt hoch mit inerten, das heißt zugesetzten Pigmenten gefüllt. Die Konzentration der inerten Partikel in der Deckschicht C liegt im Allgemeinen zwischen 0,1 und 0,4 Gew.-%, bevorzugt zwischen 0,14 und 0,35 Gew.-% und in der besonders bevorzugten Ausführungsform zwischen 0,16 und 0,30 Gew.-% (bezogen auf das Gewicht der Deckschicht (C)) und richtet sich im Wesentlichen nach den zu erzielenden optischen Eigenschaften der Folie.

Die Gesamtdicke der erfindungsgemäßen Polyesterfolie kann innerhalb weiter Grenzen variieren und richtet sich nach dem beabsichtigten Verwendungszweck. Sie beträgt meist 6 bis 300 $\mu$m, vorzugsweise 8 bis 200 $\mu$m, besonders bevorzugt 10 bis 100 $\mu$m, wobei im Falle aufgebrachter Deckschichten die Basisschicht (B) einen Anteil von vorzugsweise 40 bis 99 % der Gesamtdicke hat.

Verfahren

Gegenstand der vorliegenden Erfindung ist auch ein Verfahren zur Herstellung der Folie. Zur Herstellung der Folie werden zweckmäßigerweise der Polyester oder die Komponenten (Komponente 1 = aromatische Polyesterhomo- oder Polyestercopolymere oder Mischungen hiervon, Komponente 2 = aliphatische Polyesterhomo- oder Polyestercopolymere oder Mischungen hiervon) des Polyesters direkt dem Extruder für die Monofolie, oder, im Falle von Mehrschichtfolien für die Basisschicht (B) zugeführt. Die Materialien lassen sich bei etwa 250 bis 300 °C extrudieren. Aus verfahrenstechnischer Sicht (Durchmischung der verschiedenen Polymere) hat es sich dabei als besonders günstig erwiesen, wenn die Extrusion der Mischung auf einem Zweischneckenextruder mit Entgasungsmöglichkeit durchgeführt wird (wobei in einer weniger bevorzugten Variante auch ein Einschneckenextruder erfolgreich verwendet werden kann).

Eine weitere Möglichkeit im Sinne der Erfindung betrifft die Herstellung eines Terpolymers aus den beteiligten aliphatischen und aromatischen Polyestereinheiten.

Die Polymere für eventuell vorhandene Deckschichten (C und/oder A) werden zweckmäßig über weitere Extruder dem (Coextrusions-) System zugeführt. Die Schmelzen werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Streckung wird erfindungsgemäß bevorzugt sequentiell durchgeführt. Dabei wird vorzugsweise erst in Längsrichtung (d. h. in Maschinenrichtung MD) und anschließend in Querrichtung (d. h. senkrecht zur Maschinenrichtung TD) gestreckt. Das Strecken in Längsrichtung lässt sich z. B. mit Hilfe von zwei entsprechend dem angestrebten Streckverhältnis verschieden schnell rotierenden Walzen durchführen. Zum Querstrecken benutzt man allgemein einen entsprechenden Kluppenrahmen.

In einer weiteren erfindungsgemäßen Ausführungsform wird die Streckung mit Hilfe eines simultan arbeitenden Streckverfahrens wie z. B. LISIM oder MESIM durchgeführt. Allerdings stellt die Wirtschaftlichkeit der heute üblichen sequentiellen Streckverfahren aufgrund ihrer größeren Maschinenbreiten und höheren Geschwindigkeiten Vorteile gegenüber dem Simultanstreckverfahren dar.

Erfindungsgemäß wird die Folie in Längsrichtung (MD) in einem Temperaturbereich von bevorzugt 60 (Aufheiztemperaturen 60 bis 130 °C, abhängig vom Streckverhältnis und dem verwendeten Streckverfahren) bis 130 °C (Strecktemperaturen 60 bis 130 °C, abhängig vom Streckverhältnis und dem verwendeten Streckverfahren) und in Querstreckung (TD) in einem Temperaturbereich von bevorzugt 90 (Beginn der Streckung) bis 140 °C (Ende der Strek- kung) gestreckt.

Das Längsstreckverhältnis ist bevorzugt größer als 2,5 und liegt insbesondere im Bereich von 3:1 bis 5:1 und besonders bevorzugt im Bereich von 3,2:1 bis 4,9:1. Das Querstreckverhältnis ist bevorzugt größer als 3 und liegt bevorzugt im Bereich von 3,2:1 bis 5:1 und besonders bevorzugt im Bereich von 3,3:1 bis 4,8:1.

Vor der Querstreckung kann man eine oder beide Oberflächen der Folie nach den bekannten Verfahren in- line beschichten. Die In-line-Beschichtung kann beispielsweise zu einer verbesserten Haftung einer Metallschicht oder einer eventuell später aufzubringenden Druckfarbe, aber auch zur Verbesserung des antistatischen Verhaltens oder des Verarbeitungsverhaltens dienen.

Bei der nachfolgenden Thermofixierung wird die Folie über eine Zeitdauer von etwa 0,1 bis 10 s bei einer Temperatur von ca. 150 bis 250 °C gehalten. Anschließend wird die Folie in üblicher Weise aufgewickelt.

Bevorzugt wird nach der biaxialen Streckung eine der beiden Oberflächen der Folie nach einer der bekannten Methoden corona- oder flammbehandelt. Die Behandlungsintensität liegt im Allgemeinen im Bereich von über 50 mN/m.

Bevorzugte Eigenschaften der Folie

- Der Elastizitätsmodul (E-Modul) ist ≤ 3000 N/mm² in beiden Orientierungsrichtungen (MD und TD). In einer bevorzugten Ausführungsform ist der Elastizitätsmodul ≤ 2200 N/mm$^2$. In einer besonders bevorzugten Ausführungsform ist der Elastizitätsmodul ≤ 1500 N/mm$^2$.

- Die Reißfestigkeit ist ≤ 100 N/mm$^2$ in beiden Orientierungsrichtungen. In einer bevorzugten Ausführungsform ist die Reißfestigkeit ≤ 80 N/mm$^2$. In einer besonders bevorzugten Ausführungsform ist die Reißfestigkeit ≤ 60 N/mm$^2$.
- Die Kristallinität ist im Vergleich zu Standard-PET deutlich reduziert, wodurch die planare Orientierung Δp zwischen 0,03 und 0,12 liegt und die Dichte ≤ 1,38 g/cm$^3$ ist. In einer bevorzugten Ausführungsform liegt die planare Orientierung Δp zwischen 0,04 und 0,11, und die Dichte ist bevorzugt ≤ 1,37 g/cm$^3$.
- Der Glanz beider Folienoberflächen ist größer als 100 bei einem Einstrahlwinkel von 20°. In einer besonders bevorzugten Ausführungsform beträgt der Glanz der Folienoberflächen mehr als 120.
- Die Trübung der Folie ist kleiner als 20 %. In einer besonders bevorzugten Ausführungsform beträgt die Trübung der Folie weniger als 15 %.
- Im Falle der heißsiegelfähig ausgerüsteten Folie hat die heißsiegelfähige Deckschicht (A) eine Siegelanspringtemperatur, auch Mindestsiegeltemperatur genannt, von kleiner als 125 °C (gegen sich selbst).

Bei der Herstellung der Folie ist gewährleistet, dass Verschnittmaterial, das bei der Folienherstellung im Betrieb immanent anfällt, als Regenerat in einer Menge von bevorzugt 5 bis 60 Gew.-%, insbesondere 10 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die erfindungsgemäße Folie ist z. B. hervorragend geeignet als Trägerschicht in einem transdermalen Pflaster. Die Folie hat durch ihre geringen mechanischen Festigkeiten eine ausgezeichnete, weiche Haptik, die einen deutlich verbesserten Tragekomfort gegenüber dem heute zumeist verwendeten steiferen PET geben. Daneben eignet sie sich hervorragend zum Verpacken von Nahrungs- und Genussmitteln, zum Metallisieren oder Vakuumbeschichten mit keramischen Substanzen oder - im Falle der heißsiegelfähigen Variante - als Schutzfolie bei metallischen Blechen, auf denen sie dann z. B. heißgesiegelt wird.

Die nachstehende Tabelle (Tabelle 1) fasst die wichtigsten bevorzugten Folieneigenschaften zusammen.

Tabelle 1

| Folie bzw. Basisschicht | bevorzugt | besonders bevorzugt | ganz besonders bevorzugt | Einheit | Messmethode |
|---|---|---|---|---|---|
| Anteil Einheiten im erfindungsgemäßen Polyester aus **aromatischen** Dicarbonsäuren | 55 bis 90 | 60 bis 90 | 65 bis 85 | Mol-% | |
| Anteil Einheiten im erfindungsgemäßen Polyester aus **aliphatischen** Dicarbonsäuren | 5 bis 45 | 10 bis 40 | 15 bis 35 | Mol-% | |
| Füllstofflconzentration in der Basisschicht (B) einer einschichtigen Folie | 0,02 bis 1 | 0,04 bis 0,8 | 0,06 bis 0,6 | Gew.-% | |
| Füllstoffkonzentration in den Deckschichten (A) und/oder (C) einer mehrschichtigen, nicht heißsiegelfähigen Folie | 0,02 bis 1 | 0,04 bis 0,8 | 0,06 bis 0,6 | Gew.-% | |
| Füllstofflconzentration in der Deckschicht (C) einer mehrschichtigen heißsiegelfähigen Folie | 0,1 bis 0,4 | 0,14 bis 0,35 | 0,16 bis 0,3 | Gew.-% | |
| **Folieneigenschaften** | | | | | |

(fortgesetzt)

| Folie bzw. Basisschicht | bevorzugt | besonders bevorzugt | ganz besonders bevorzugt | Einheit | Messmethode |
|---|---|---|---|---|---|
| E-Modul der Folie in beiden Orientierungsrichtungen | $\leq 3000$ | $\leq 2200$ | $\leq 1500$ | N/mm$^2$ | DIN 53 457 |
| Reißfestigkeit der Folie in beiden Orientierungsrichtungen | $\leq 100$ | $\leq 80$ | $\leq 60$ | N/mm$^2$ | DIN 53 455 |
| Dichte | $\leq 1,38$ | $\leq 1,37$ | $\leq 1,36$ | g/cm$^3$ | ASTM-D 1505-68 Methode C |
| $\Delta p$ | 0,03 bis 0,12 | 0,04 bis 0,11 | 0,05 bis 0,10 | | |
| Glanz der Folie (Messwinkel 20°) | $\geq 100$ | $\geq 120$ | $\geq 140$ | - | DIN 67 530 |
| Trübung der Folie | $\leq 20$ | $\leq 15$ | $\leq 10$ % | % | ASTM-D 1003-52 |
| Dicke der Folie | 6 bis 300 | 8 bis 200 | 10 bis 100 | $\mu$m | |

Messmethoden

Zur Charakterisierung der Rohstoffe und der Folien werden die folgenden Methoden benutzt:
DIN = Deutsches Institut für Normung,
ASTM = American Society for Testing and Materials

(1) Trübung

Die Trübung der Folie wird nach ASTM-D 1003-52 bestimmt.

(2) SV-Wert (standard viscosity)

Die Standardviskosität SV (DCE) wird, angelehnt an DIN 53726, bei 25 °C in Dichloressigsäure gemessen. Die intrinsische Viskosität (IV) berechnet sich wie folgt aus der Standardviskosität

$$IV = [\eta] = 6{,}907 \cdot 10^{-4} \, SV \, (DCE) + 0{,}063096 \, [dl/g]$$

(3) Glanz

Der Glanz wird nach DIN 67530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden. Die in den Beispielen angegebenen Messwerte für den Glanz werden bei einem Einstrahlwinkel von 20° gemessen.

(4) E-Modul

Der E-Modul wird gemäß DIN 53 457 bzw. ASTM 882 bestimmt

(5) Reißfestigkeit, Reißdehnung

Die Reißfestigkeit und die Reißdehnung werden nach DIN 53 455 bestimmt.

(6) Planare Orientierung $\Delta p$ und Brechungsindex

Die Bestimmung der planaren Orientierung erfolgt über die Messung der Brechungsindizes mit dem Abbe-Refraktometer (vgl. dazu beispielsweise die EP-A-1 138 480 A2, in der die vollständige Messvorschrift wiedergegeben ist).

(7) Glasübergangstemperatur

Die Glasübergangstemperaturen $T_g1$ und $T_g2$ wurden anhand von Folienproben mit Hilfe der DSC (Differential Scanning Calorimetry) bestimmt. Verwendet wurde ein DSC 1090 der Fa. DuPont. Die Aufheizgeschwindigkeit betrug 20 K/min und die Einwaage ca. 12 mg. Im ersten Aufheizvorgang wurde der Glasübergang $T_g1$ ermittelt. Die Proben zeigten vielfach eine Enthalpierelaxation (ein Peak) zu Beginn des stufenförmigen Glasübergangs. Als $T_g1$ wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet. Möglicherweise überdeckten die peakförmigen Enthalpierelaxationen die Feinstruktur der Stufe, oder die Auflösung des Gerätes war für eine Auftrennung der kleinen, "verschmierten" Übergänge von orientierten, kristallinen Proben nicht ausreichend. Um die thermische Vorgeschichte zu eliminieren, wurden die Proben nach dem Aufheizen 5 Minuten bei 300 °C gehalten und dann anschließend mit flüssigem Stickstoff abgeschreckt. Aus dem Thermogramm für das zweite Aufheizen wurde die Temperatur für den Glasübergang $T_g2$ als die Temperatur bei halber Stufenhöhe entnommen.

(8) Messung des mittleren Partikeldurchmessers $d_{50}$

Die Bestimmung des mittleren Partikeldurchmessers $d_{50}$ wird mittels Laser auf einem Master Sizer (Malvern Instruments, GB) nach der Standardmethode durchgeführt (andere Messgeräte sind z. B. Horiba LA 500 (Horiba Ltd., JP) oder Helos (Sympatec GmbH, DE), welche das gleiche Messprinzip verwenden). Die Proben werden dazu in eine Küvette mit Wasser gegeben und diese dann in das Messgerät gestellt. Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 Gew.-%-Ordinatenwertes mit der Summenkurve liefert auf der Abszissenachse den gewünschten $d_{50}$-Wert.

(9) Siegelnahtfestigkeit gegenüber sich selbst (= FIN-Siegelung)

Zur Bestimmung der Siegelnahtfestigkeit werden zwei 15 mm breite Folienstreifen übereinandergelegt und bei 130 °C, einer Siegelzeit von 0,5 s und einem Siegeldruck von 2 bar (Gerät: Brugger Typ NDS, DE, einseitig beheizte Siegelbacke) versiegelt. Die Siegelnahtfestigkeit wurde nach der T-Peel-Methode bestimmt = 2 · 90°.

(10) Bestimmung der Mindestsiegeltemperatur gegenüber sich selbst

Mit dem Siegelgerät HSG/ET der Firma Brugger, DE, werden heißgesiegelte Proben (Siegelnaht 20 mm x 100 mm) hergestellt, wobei die Folie bei unterschiedlichen Temperaturen mit Hilfe zweier beheizter Siegelbacken bei einem Siegeldruck von 2 bar und einer Siegeldauer von 0,5 s gesiegelt wird. Aus den gesiegelten Proben wurden Prüfstreifen von 15 mm Breite geschnitten. Die T-Siegelnahtfestigkeit wird wie bei der Bestimmung der Siegelnahtfestigkeit gemessen. Die Mindestsiegeltemperatur ist die Temperatur, bei der eine Siegelnahtfestigkeit von mindestens 0,5 N/15 mm erreicht wird.

**Beispiele**

Die folgenden Beispiele illustrieren die Erfindung. Die verwendeten Produkte (Marken und Herstellerfirma) sind jeweils nur einmal angegeben und beziehen sich dann auch auf die nachfolgenden Beispiele.

Beispiel 1

Chips aus Komponente I, Komponente II und Komponente III werden in einem Mischungsverhältnis von 40: 50: 10 dem Extruder (Zweischneckenextruder mit zwei Entgasungsmöglichkeiten) zugeführt und durch Extrusion eine einschichtige Folie hergestellt. Die Folie wurde in Längsrichtung und in Querrichtung verstreckt, und es wurde eine transparente Folie mit einer Gesamtdicke von 20 $\mu$m erhalten.

Folienaufbau

40 Gew.-%  Komponente I: Polyethylenterephthalat 4023 der Fa. Invista, Deutschland, mit einem SV-Wert von 800 (hergestellt über das Umesterungsverfahren mit Mn als Umesterungskatalysator; Polykondensationskatalysator auf Basis von Antimon)

50 Gew.-%  Komponente II: Copolymeres, enthaltend 40 Mol-% Ethylenazelat, 50 Mol-% Ethylenterephthalat und 10 Mol-% Ethylenisophthalat mit einem SV-Wert von 1000. Die Glasübergangstemperatur von dieser Komponente beträgt ca. 0 °C.

10 Gew.-%  Komponente III: Polyesterrohstoff (= Polyethylenterephthalat) von Fa. Invista mit einem SV-Wert von 800, bestehend aus 99 Gew.-% Polyethylenterephthalat 4023 der Fa. Invista und 1,0 Gew.-% Kieselsäurepartikel (Sylysia® 320 von der Fa. Fuji/Japan) mit einem $d_{50}$-Wert von 2,5 $\mu$m

Die Herstellungsbedingungen in den einzelnen Verfahrensschritten sind wie folgt:

| | | | |
|---|---|---|---|
| Extrusion | max. Temperatur | | 260°C |
| | Temperatur der Abzugswalze | | 20 °C |
| Längsstreckung | Längsstreckverhältnis | $\lambda_{MDO}$ | 4,0 |
| | Strecktemperatur | | 80 °C |
| | Aufheiztemperatur | 1. Walze | 60 °C |
| | | letzte Walze | 80 °C |
| Querstreckung | Strecktemperatur | Anfang | 100 °C |
| | | Ende | 125 °C |
| | Querstreckverhältnis | | 3,8 |
| Fixierung | Temperatur | | 200 °C |
| | Dauer | | 3 s |

Die Folie hatte die geforderten niedrigen mechanischen Festigkeiten und die geforderte niedrige Trübung. Beide Oberflächen der Folie hatten den geforderten hohen Glanz. Weiterhin konnte die Folie sehr gut, d.h. abrissfrei, hergestellt werden und zeigte außerdem das gewünschte Verarbeitungsverhalten (u. a. gute Wickelqualität wie z. B. keine Blockpickel, keine Längsrillen, keine hohen Kanten).

Beispiel 2

In diesem Beispiel wurden die Mischungsverhältnisse der Komponenten geändert und die Verfahrensbedingungen angepasst. Chips aus Komponente I, Komponente II und Komponente III wurden in einem Mischungsverhältnis von 50:40: 10 dem Extruder (Zweischneckenextruder) zugeführt und durch Extrusion eine einschichtige Folie hergestellt. Die Folie wurde in Längsrichtung und in Querrichtung verstreckt, und es wurde eine transparente Folie mit einer Gesamtdicke von 20 $\mu$m erhalten.

Folienaufbau
50 Gew.-%  Komponente I
40 Gew.-%  Komponente II
10 Gew.-%  Komponente III

Die Herstellungsbedingungen in den einzelnen Verfahrensschritten sind wie folgt:

| | | | |
|---|---|---|---|
| Extrusion | max. Temperatur | | 260 °C |
| | Temperatur der Abzugswalze | | 20 °C |
| Längsstreckung | Längsstreckverhältnis | $\lambda_{MDO}$ | 4,2 |
| | Strecktemperatur | | 85 °C |
| | Aufheiztemperatur | 1. Walze | 60 °C |
| | | letzte Walze | 75 °C |

(fortgesetzt)

| | | | |
|---|---|---|---|
| Querstreckung | Strecktemperatur | Anfang | 100 °C |
| | | Ende | 125 °C |
| | Querstreckverhältnis | | 3,8 |
| Fixierung | Temperatur | | 205 °C |
| | Dauer | | 3 s |

Die Oberflächen der Folie hatten den geforderten hohen Glanz, die Folie die geforderte niedrige Trübung und die geforderten niedrigen mechanischen Festigkeiten. Weiterhin konnte die Folie sehr gut, d. h. abrissfrei, hergestellt werden und zeigte außerdem das gewünschte Verarbeitungsverhalten (u. a. gute Wickelqualität wie z. B. keine Blockpickel, keine Längsrillen, keine hohen Kanten).

Beispiel 3

In diesem Beispiel wurden wiederum nur die Mischungsverhältnisse der Komponenten geändert und die Verfahrensbedingungen entsprechend angepasst. Chips aus Komponente I, Komponente II und Komponente III wurden in einem Mischungsverhältnis von 60:30:10 dem Extruder (Zweischneckenextruder) zugeführt und durch Extrusion eine einschichtige Folie hergestellt. Die Folie wurde in Längsrichtung und in Querrichtung verstreckt, und es wurde eine transparente Folie mit einer Gesamtdicke von 20 μm erhalten.

Folienaufbau
60 Gew.-%    Komponente I
30 Gew.-%    Komponente II
10 Gew.-%    Komponente III

Die Herstellungsbedingungen in den einzelnen Verfahrensschritten sind wie folgt:

| | | | |
|---|---|---|---|
| Extrusion | max. Temperatur | | 270 °C |
| | Temperatur der Abzugswalze | | 22 °C |
| Längsstreckung | Längsstreckverhältnis | $\lambda_{MDO}$ | 4,0 |
| | Strecktemperatur | | 90 °C |
| | Aufheiztemperatur | 1. Walze | 60 °C |
| | | letzte Walze | 80 °C |
| Querstreckung | Strecktemperatur | Anfang | 110°C |
| | | Ende | 130 °C |
| | Querstreckverhältnis | | 3,8 |
| Fixierung | Temperatur | | 210 °C |
| | Dauer | | 3 s |

Die Oberflächen der Folie hatten den geforderten hohen Glanz, die Folie die geforderte niedrige Trübung und die geforderten niedrigen mechanischen Festigkeiten. Weiterhin konnte die Folie sehr gut, d. h. abrissfrei, hergestellt werden und zeigte außerdem das gewünschte Verarbeitungsverhalten (u. a. gute Wickelqualität wie z. B. keine Blockpickel, keine Längsrillen, keine hohen Kanten).

Beispiel 4

Im Vergleich zu Beispiel 1 wurde jetzt eine coextrudierte Folie mit ABA-Folienaufbau hergestellt. In der Basisschicht (B) wurden jetzt keine Partikel verwendet, diese wurden ausschließlich den beiden Coexschichten aus PET-Homopolymer dazugegeben. Die Basisschicht (B) bestand jetzt aus den Komponenten I und Komponenten II, die in einem Mischungsverhältnis von 50:50 dem Zweischneckenextruder dazugegeben wurden. Die Zusammensetzung der Komponenten I und Komponenten II war wie in den Beispielen zuvor.

Folienaufbau
Basisschicht (B):    18 μm dick

(fortgesetzt)

| Folienaufbau | |
| --- | --- |
| 50 Gew.-% | Komponente I |
| 50 Gew.-% | Komponente II |
| Coexschichten (A): | je 1 μm dick |
| 90 Gew.-% | Komponente I |
| 10 Gew.-% | Komponente III |

Die Herstellungsbedingungen in den einzelnen Verfahrensschritten sind wie folgt:

| Extrusion | max. Temperatur | | 260 °C |
| --- | --- | --- | --- |
| | Temperatur der Abzugswalze | | 20 °C |
| Längsstreckung | Längsstreckverhältnis | $\lambda_{MDO}$ | 4,0 |
| | Strecktemperatur | | 80 °C |
| | Aufheiztemperatur | 1. Walze | 60 °C |
| | | letzte Walze | 80 °C |
| Querstreckung | Strecktemperatur | Anfang | 100 °C |
| | | Ende | 125 °C |
| | Querstreckverhältnis | | 3,8 |
| Fixierung | Temperatur | | 200 °C |
| | Dauer | | 3 s |

Die Oberflächen der Folie hatten den geforderten hohen Glanz, die Folie die geforderte niedrige Trübung und die geforderten niedrigen mechanischen Festigkeiten. Weiterhin konnte die Folie sehr gut, d.h. abrissfrei und ohne auf Walzen zu verkleben oder zu verblocken, hergestellt werden und zeigte außerdem das gewünschte Verarbeitungsverhalten (u. a. gute Wickelqualität wie z. B. keine Blockpickel, keine Längsrillen, keine hohen Kanten).

Beispiel 5

Im Vergleich zu Beispiel 4 wurde eine coextrudierten Folie mit einem ABA Folienaufbau hergestellt, wobei jetzt die Rezeptur der Basisschicht (B) geändert wurde.

| Folienaufbau | |
| --- | --- |
| Basisschicht (B): | 18 μm dick |
| 70 Gew.-% | Komponente I |
| 30 Gew.-% | Komponente II |
| Coexschichten (A): | je 1 μm dick |
| 90 Gew.-% | Komponente I |
| 10 Gew.-% | Komponente III |

Die Herstellungsbedingungen in den einzelnen Verfahrensschritten sind wie bei Beispiel 4 beschrieben.

Beispiel 6 (heißsiegelfähige Folie)

Chips aus Komponente I und Komponente II werden in einem Mischungsverhältnis von 50:50 dem Extruder (Zweischneckenextruder mit zwei Entgasungsmöglichkeiten) für die Basisschicht (B) zugeführt. Chips aus einer Komponente IV werden einem Extruder (Zweischneckenextruder mit zwei Entgasungsmöglichkeiten) für die heißsiegelfähige Deckschicht (A) zugeführt. Daneben werden Chips aus der Komponente I und einer weiteren Komponente V in einem Mischungsverhältnis von 90:10 dem Extruder (Zweischneckenextruder mit zwei Entgasungsmöglichkeiten) für die Deckschicht (C) zugeführt. Es wird über die Coextrusion eine dreischichtige unorientierte Folie vom ABC-Aufbau hergestellt. Die Folie wird in Längsrichtung und in Querrichtung verstreckt, und es wird eine transparente biaxial orientierte Folie mit einer Gesamtdicke von 20 μm erhalten.

Folienaufbau der Basisschicht (B)

| | |
|---|---|
| 50 Gew.-% | Komponente I |
| 50 Gew.-% | Komponente II |

Deckschicht (A)

100,0 Gew.-% Komponente IV: Copolyester mit 78 Mol.-% Ethylenterephthalat und 22 Mol-% Ethylenisophthalat (hergestellt über das Umesterungsverfahren mit Mn als Umesterungskatalysator, Mn-Konzentration: 100 ppm).

Deckschicht (C)

| | |
|---|---|
| 90 Gew.-% | Komponente I |
| 10 Gew.-% | Komponente III |

Die Herstellungsbedingungen in den einzelnen Verfahrensschritten sind wie folgt:

| Extrusion | max. Temperatur | | 260 °C |
|---|---|---|---|
| | Temperatur der Abzugswalze | | 20 °C |
| Längsstreckung | Längsstreckverhältnis | $\lambda_{MDO}$ | 4,0 |
| | Strecktemperatur | | 80 °C |
| | Aufheiztemperatur | 1. Walze | 60 °C |
| | | letzte Walze | 80 °C |
| Querstreckung | Strecktemperatur | Anfang | 100 °C |
| | | Ende | 125 °C |
| | Querstreckverhältnis | | 3,8 |
| Fixierung | Temperatur | | 200 °C |
| | Dauer | | 3 s |

Die Folie hat die geforderten niedrigen mechanischen Festigkeiten, die geforderte Heißsiegelbarkeit und die geforderte niedrige Trübung. Beide Oberflächen der Folie haben den geforderten hohen Glanz. Weiterhin kann die Folie sehr gut, d. h. abrissfrei und ohne auf Walzen zu verkleben oder zu verblocken, hergestellt werden und zeigt außerdem das gewünschte Verarbeitungsverhalten (u. a. gute Wickelqualität wie z. B. keine Blockpickel, keine Längsrillen, keine hohen Kanten).

Vergleichsbeispiel 1

Es wurde eine Folie entsprechend dem Beispiel 1 der EP-A-415 383 hergestellt. Die planare Orientierung dieser Folie ist zu hoch, die Dichte der Folie und insbesondere die mechanischen Eigenschaften liegen nicht im erfindungsgemäßen Bereich. Außerdem hatte die Folie eine zu hohe Steifigkeit, was ihr eine harte, unangenehme Haptik verleiht.

Die Eigenschaften und der Aufbau der gemäß den Beispielen und dem Vergleichsbeispiel hergestellten Folien sind in Tabelle 2 zusammengestellt.

**Tabelle 2**

| | Folienaufbau | Dicke [$\mu$m] | Glanz 20° | Trübung [%] | Dichte [g/cm³] | $\Delta$p | E-Modul [N/mm²] | | Reißfestigkeit [N/mm²] | |
|---|---|---|---|---|---|---|---|---|---|---|
| | | | | | | | MD | TD | MD | TD |
| **Beispiel 1** | mono | 20 | 143 | 19 | 1,34 | 0,063 | 1033 | 1220 | 52 | 58 |
| **Beispiel 2** | mono | 20 | 174 | 16 | 1,35 | 0,071 | 1385 | 1649 | 55 | 62 |
| **Beispiel 3** | mono | 20 | 181 | 10 | 1,36 | 0,076 | 1647 | 2004 | 58 | 64 |
| **Beispiel 4** | ABA | 20 (=1 / 18 / 1) | 160 | 16 | 1,34 | 0,064 | 1050 | 1239 | 53 | 60 |
| **Beispiel 5** | ABA | 20 (= 1 / 18 / 1) | 181 | 10 | 1,36 | 0,076 | 1647 | 2004 | 58 | 64 |
| **Beispiel 6** | ABC | 20 (= 2 / 17 / 1) | 160 | 16 | 1,34 | 0,064 | 1050 | 1239 | 53 | 60 |
| **Vergleichsbeispiel 1** | mono | 20 | | | 1,38 | 0,14 | | | | |

**Patentansprüche**

1. Biaxial orientierte Polyesterfolie, welche eine Basisschicht (B) aufweist, die zu mindestens 80 Gew.-% einen Polyester enthält, der zu 55-90 Mol-% aus Einheiten aufgebaut ist, die auf mindestens zwei aromatische Dicarbonsäuren, ausgewählt aus Terephthalsäure und Isophthalsäure, zurückgehen, und der zu 5-45 Mol-% aus Einheiten aufgebaut ist, die auf mindestens eine aliphatische Dicarbonsäure zurückgehen, wobei die Summe der dicarbonsäureabgeleiteten Molprozente 100 ergibt.

2. Polyesterfolie nach Anspruch 1, **dadurch gekennzeichnet, dass** die Basisschicht (B) als aliphatische Dicarbonsäure Pimelinsäure, Korksäure, Azelainsäure, Sebazinsäure, Glutarsäure oder Adipinsäure enthält.

3. Polyesterfolie nach Anspruch 1 oder 2, **dadurch gekennzeichnet, dass** die Basisschicht (B) als aliphatische Dicarbonsäure Azelainsäure, Sebazinsäure oder Adipinsäure enthält.

4. Polyesterfolie nach einem oder mehreren der Ansprüche 1 bis 3, **dadurch gekennzeichnet, dass** die Basisschicht (B) Polyethylenterephthalat enthält.

5. Polyesterfolie nach einem oder mehreren der Ansprüche 1 bis 4, **dadurch gekennzeichnet, dass** die Folie mehrschichtig ist und mindestens eine Basisschicht (B) und eine Deckschicht (A) aufweist.

6. Polyesterfolie nach einem oder mehreren der Ansprüche 1 bis 5, **dadurch gekennzeichnet, dass** die Folie dreischichtig ist und einen ABC-Schichtaufbau hat, wobei die Deckschichten (A) und (C) gleich oder verschieden sind.

7. Polyesterfolie nach einem oder mehreren der Ansprüche 1 bis 6, **dadurch gekennzeichnet, dass** die Folie einen ABA-Schichtaufbau hat.

8. Polyesterfolie nach einem oder mehreren der Ansprüche 1 bis 7, **dadurch gekennzeichnet, dass** die Folie in den Deckschichten (A) und (C) die gleichen aromatischen Dicarbonsäureeinheiten wie in der Basisschicht (B) enthält.

9. Polyesterfolie nach einem oder mehreren der Ansprüche 1 bis 8, **dadurch gekennzeichnet, dass** die Deckschichten (A) und (C) keine aliphatischen Dicarbonsäureeinheiten enthalten.

10. Polyesterfolie nach einem oder mehreren der Ansprüche 1 bis 9, **dadurch gekennzeichnet, dass** die Deckschichten (A) und (C) Polyethylenterephthalat enthalten.

11. Polyesterfolie nach einem der Ansprüche 5 bis 10, **dadurch gekennzeichnet, dass** die Deckschicht (A) heißsiegelfähig ist und zu mindestens 70 Gew.-% einen Copolyester enthält, der aus 60 bis 95 Mol-% Ethylenterephthalat und 40 bis 5 Mol-% Ethylenisophthalat aufgebaut ist.

12. Polyesterfolie nach Anspruche 11, **dadurch gekennzeichnet, dass** die heißsiegelfähige Deckschicht (A) keine Antiblockmittel enthält.

13. Polyesterfolie nach einem der Ansprüche 6 und 8 bis 12, **dadurch gekennzeichnet, dass** die Deckschicht (C) 0,1 - 0,4 Gew.-% Antiblockmittel enthält.

14. Polyesterfolie nach einem oder mehreren der Ansprüche 1 bis 13, **dadurch gekennzeichnet, dass** der $T_g2$-Wert der Polyesterfolie über dem $T_g2$-Wert der Basisschicht (B), aber unterhalb dem $T_g2$-Wert der Deckschichten (A) und (C) liegt.

15. Polyesterfolie nach einem oder mehreren der Ansprüche 11 bis 14, **dadurch gekennzeichnet, dass** die heißsiegelfähige Deckschicht (A) eine Mindestsiegeltemperatur gegen sich selbst von kleiner als 125 °C aufweist.

16. Polyesterfolie nach einem oder mehreren der Ansprüche 1 bis 15, **dadurch gekennzeichnet, dass** die Folie einen Elastizitätsmodul von $\leq 3000$ N/mm$^2$ aufweist.

17. Polyesterfolie nach einem oder mehreren der Ansprüche 1 bis 16, **dadurch gekennzeichnet, dass** die Folie eine Reißfestigkeit von $\leq 100$ N/mm$^2$ aufweist.

**18.** Polyesterfolie nach einem oder mehreren der Ansprüche 1 bis 17, **dadurch gekennzeichnet, dass** die Basisschicht (B) 0,02 bis 1 Gew.-% Antiblockmittel enthält.

**19.** Polyesterfolie nach einem oder mehreren der Ansprüche 1 bis 18, **dadurch gekennzeichnet, dass** die Deckschichten (A) und (C) 0,02 bis 1 Gew.-% Antiblockmittel enthalten.

**20.** Polyesterfolie nach einem oder mehreren der Ansprüche 1 bis 19, **dadurch gekennzeichnet, dass** die Folie eine Dichte von $\leq 1,38$ g/cm$^3$ und eine planare Orientierung von 0,03 bis 0,12 aufweist.

**21.** Verfahren zur Herstellung einer Polyesterfolie nach einem oder mehreren der Ansprüche 1 bis 18 umfassend die Schritte:

   a) Herstellen einer ein- oder mehrschichtigen Folie durch Extrusion oder Coextrusion,
   b) biaxiales Strecken der Folie und
   c) Thermofixieren der gestreckten Folie

**22.** Verwendung einer Polyesterfolie nach einem oder mehreren der Ansprüche 1 bis 16 zur Herstellung von Pflastern oder als Verpackungsmaterial für Nahrungs- und Genussmittel.

**23.** Verwendung einer Polyesterfolie nach einem oder mehreren der Ansprüche 11 bis 20 als Schutzfolie.

**Claims**

**1.** A biaxially oriented polyester film having a base layer (B) which comprises at least 80 % by weight of a polyester composed of from 55 to 90 mol% of units deriving from at least two aromatic dicarboxylic acids, selected from terephthalic acid and isophthalic acid, and of from 5 to 45 mol% of units deriving from at least one aliphatic dicarboxylic acid, where the total of the dicarboxylic-acid-derived molar percentages is 100.

**2.** The polyester film as claimed in claim 1, wherein the base layer (B) comprises, as aliphatic dicarboxylic acid, pimelic acid, suberic acid, azelaic acid, sebacic acid, glutaric acid, or adipic acid.

**3.** The polyester film as claimed in claim 1 or 2, wherein the base layer (B) comprises, as aliphatic dicarboxylic acid, azelaic acid, sebacic acid, or adipic acid.

**4.** The polyester film as claimed in one or more of claims 1 to 3, wherein the base layer (B) comprises polyethylene terephthalate.

**5.** The polyester film as claimed in one or more of claims 1 to 4, which is a multilayer film having at least one base layer (B) and one outer layer (A).

**6.** The polyester film as claimed in one or more of claims 1 to 5, which is a three-layer film having an ABC layer structure, where the outer layers (A) and (C) are identical or different.

**7.** The polyester film as claimed in one or more of claims 1 to 6, which has an ABA layer structure.

**8.** The polyester film as claimed in one or more of claims 1 to 7, which has the same aromatic dicarboxylic acid units in the outer layers (A) and (C) as in the base layer (B).

**9.** The polyester film as claimed in one or more of claims 1 to 8, wherein the outer layers (A) and (C) comprise no aliphatic dicarboxylic acid units.

**10.** The polyester film as claimed in one or more of claims 1 to 9, wherein the outer layers (A) and (C) comprise polyethylene terephthalate.

**11.** The polyester film as claimed in one or more of claims 5 to 10, wherein the outer layer (A) is heat-sealable and comprises at least 70 % by weight of a copolyester composed of from 60 to 95 mol% of ethylene terephthalate and from 40 to 5 mol% of ethylene isophthalate.

**12.** The polyester film as claimed in claim 11, wherein the heat-sealable outer layer (A) comprises no antiblocking agents.

**13.** The polyester film as claimed in any of claims 6 and 8 to 12, wherein the outer layer (C) comprises from 0.1 to 0.4 % by weight of antiblocking agents.

**14.** The polyester film as claimed in one or more of claims 1 to 13, whose $T_g2$ value is above the $T_g2$ value of the base layer (B), but below the $T_g2$ value of the outer layers (A) and (C).

**15.** The polyester film as claimed in one or more of claims 11 to 14, wherein the minimum sealing temperature of the heat-sealable outer layer (A) with respect to itself is smaller than 125 °C.

**16.** The polyester film as claimed in one or more of claims 1 to 15, whose modulus of elasticity is $\leq$ 3000 N/mm$^2$.

**17.** The polyester film as claimed in one or more of claims 1 to 16, whose ultimate tensile strength is $\leq$ 100 N/mm$^2$.

**18.** The polyester film as claimed in one or more of claims 1 to 17, wherein the base layer (B) comprises from 0.02 to 1 % by weight of antiblocking agents.

**19.** The polyester film as claimed in one or more of claims 1 to 18, wherein the outer layers (A) and (C) comprise from 0.02 to 1 % by weight of antiblocking agents.

**20.** The polyester film as claimed in one or more of claims 1 to 19, whose density is $\leq$ 1.38 g/cm$^3$ and whose planar orientation is from 0.03 to 0.12.

**21.** A process for production of a polyester film as claimed in one or more of claims 1 to 18, encompassing the following steps:

a) production of a single- or multilayer film via extrusion or coextrusion,
b) biaxial stretching of the film, and
c) heat-setting of the stretched film

**22.** The use of a polyester film as claimed in one or more of claims 1 to 16 for production of adhesive plasters or as packaging material for foods and other consumable items.

**23.** The use of a polyester film as claimed in one or more of claims 11 to 20 as protective film.

**Revendications**

**1.** Feuille de polyester biaxialement orientée, qui présente une couche de base (B), qui contient à hauteur d'au moins 80 % en poids un polyester qui est constitué à hauteur de 55 à 90 % en mole d'unités, qui se ramènent à au moins deux acides dicarboxyliques aromatiques choisis parmi l'acide téréphtalique et l'acide isophtalique, et à hauteur de 5 à 45 % en mole d'unités, qui se ramènent à au moins un acide dicarboxylique aliphatique, la somme des pourcentages en moles dérivés de l'acide dicarboxylique étant de 100.

**2.** Feuille de polyester selon la revendication 1, **caractérisée en ce que** la couche de base (B) contient, comme acide dicarboxylique aliphatique, l'acide pimélique, l'acide subérique, l'acide azélaïque, l'acide sébacique, l'acide glutarique ou l'acide adipique.

**3.** Feuille de polyester selon la revendication 1 ou 2,
**caractérisée en ce que** la couche de base (B) contient, comme acide dicarboxylique aliphatique, l'acide azélaïque, l'acide sébacique ou l'acide adipique.

**4.** Feuille de polyester selon une ou plusieurs des revendications 1 à 3, **caractérisée en ce que** la couche de base (B) contient du poly(téréphtalate d'éthylène).

**5.** Feuille de polyester selon une ou plusieurs des revendications 1 à 4, **caractérisée en ce que** la feuille est formée de plusieurs couches et présente au moins une couche de base (B) et une couche de recouvrement (A).

**6.** Feuille de polyester selon une ou plusieurs des revendications 1 à 5, **caractérisée en ce que** la feuille est formée de trois couches et a une structure stratifiée de type ABC, les couches de recouvrement (A) et (C) étant identiques ou différentes.

**7.** Feuille de polyester selon une ou plusieurs des revendications 1 à 6, **caractérisée en ce que** la feuille a une structure stratifiée de type ABA.

**8.** Feuille de polyester selon une ou plusieurs des revendications 1 à 7, **caractérisée en ce que** la feuille contient, dans les couches de recouvrement (A) et (C), les mêmes unités acide dicarboxylique aromatique que dans la couche de base (B).

**9.** Feuille de polyester selon une ou plusieurs des revendications 1 à 8, **caractérisée en ce que** les couches de recouvrement (A) et (C) ne contiennent aucune unité acide dicarboxylique aliphatique.

**10.** Feuille de polyester selon une ou plusieurs des revendications 1 à 9, **caractérisée en ce que** les couches de recouvrement (A) et (C) contiennent du poly(téréphtalate d'éthylène).

**11.** Feuille de polyester selon l'une quelconque des revendications 5 à 10, **caractérisée en ce que** la couche de recouvrement (A) est thermoscellable et contient à hauteur d'au moins 70 % en poids d'un copolyester qui est constitué de 60 à 95 % en mole de téréphtalate d'éthylène et de 40 à 5 % en mole d'isophtalate d'éthylène.

**12.** Feuille de polyester selon la revendication 11, **caractérisée en ce que** la couche de recouvrement thermoscellable (A) ne contient pas d'agent antibloquant.

**13.** Feuille de polyester selon l'une quelconque des revendications 6 et 8 à 12, **caractérisée en ce que** la couche de recouvrement (C) contient 0,1 à 0,4 % en poids d'agent antibloquant.

**14.** Feuille de polyester selon une ou plusieurs des revendications 1 à 13, **caractérisée en ce que** la valeur $T_g2$ de la feuille de polyester se situe au-dessus de la valeur $T_g2$ de la couche de base (B), mais en dessous de la valeur $T_g2$ des couches de recouvrement (A) et (C).

**15.** Feuille de polyester selon une ou plusieurs des revendications 11 à 14, **caractérisée en ce que** la couche de recouvrement thermoscellable (A) présente une température de scellage minimale sur elle-même inférieure à 125 °C.

**16.** Feuille de polyester selon une ou plusieurs des revendications 1 à 15, **caractérisée en ce que** la feuille présente un module d'élasticité ≤ 3000 N/mm$^2$.

**17.** Feuille de polyester selon une ou plusieurs des revendications 1 à 16, **caractérisée en ce que** la feuille présente une résistance à la rupture ≤ 100 N/mm$^2$.

**18.** Feuille de polyester selon une ou plusieurs des revendications 1 à 17, **caractérisée en ce que** la couche de base (B) contient 0,02 à 1 % en poids d'agent antibloquant.

**19.** Feuille de polyester selon une ou plusieurs des revendications 1 à 18, **caractérisée en ce que** les couches de recouvrement (A) et (C) contiennent 0, 02 à 1 % en poids d'agent antibloquant.

**20.** Feuille de polyester selon une ou plusieurs des revendications 1 à 19, **caractérisée en ce que** la feuille présente un poids volumique ≤ 1,38 g/cm$^3$ et une orientation planaire de 0,03 à 0,12.

**21.** Procédé de fabrication d'une feuille de polyester selon une ou plusieurs des revendications 1 à 18, comprenant les étapes consistant à :

    a) fabriquer une feuille à une ou plusieurs couches par extrusion ou coextrusion,
    b) effectuer un étirage biaxial de la feuille, et
    c) procéder à une thermofixation de la feuille étirée.

**22.** Utilisation d'une feuille de polyester selon une ou plusieurs des revendications 1 à 16 pour fabriquer des pansements ou comme matériau d'emballage pour des produits alimentaires et d'agrément.

**23.** Utilisation d'une feuille de polyester selon une ou plusieurs des revendications 11 à 20 comme feuille protectrice.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2000094473 B
- JP 2004202702 B
- EP 0415383 A
- EP 1453895 A
- EP 0612790 A
- EP 0035835 A
- EP 0515096 A
- EP 1138480 A
- EP 0602964 A
- EP 415383 A